# FASCICULE DE BREVET EUROPEEN

(11) **EP 0 770 362 B1**
(45) Date de publication et mention de la délivrance du brevet: **21.02.2001**
(21) Numéro de dépôt: 95116665.1
(22) Date de dépôt: 23.10.1995
(51) Int. Cl.: A61C 5/02

(54) **Jeu d'instruments dentaires de taille croissante**
Endodontischer Werkzeugsatz mit Teilen zunehmender Grösse
Set of progressively sized endodontic instruments

(43) Date de publication de la demande: 02.05.1997
(73) Titulaire: MAILLEFER INSTRUMENTS S.A., CH-1338 Ballaigues (CH)
(72) Inventeur: Maillefer, Michel, CH-1338 Ballaigues (CH); Maillefer, Pierre-Luc, CH-1338 Ballaigues (CH)
(74) Mandataire: Micheli & Cie

(56) Documents cités:
- EP-A- 0 257 961
- WO-A-90/13267

## Description

La présente invention a pour objet un jeu d'instruments de taille croissante pour l'alésage des canaux radiculaires dentaires dans lequel chaque instrument comprend une tige conique présentant au moins une lèvre hélicoïdale coupante.

De tels jeux d'instruments, constitués par des broches et limes, sont connus en soi.

Ils sont réalisés en des séries de diamètres terminaux, c'est-à-dire de diamètres dits D1 mesurés à la naissance de leur partie terminale, dépourvue de lèvre coupante, différents, se situant, le plus souvent, entre 0,06 mm et 1,4 mm. La variation des diamètres D1 peut être une suite arithmétique, c'est-à-dire linéaire, ou géométrique. Dans ces instruments, décrit par exemple dans le brevet WO-90/13267, la conicité de la tige est constante, quel que soit le diamètre terminal, cette conicité s'exprimant, généralement, non pas par l'angle d'ouverture mais par la différence entre le diamètre terminal D1 et le diamètre dit D2 mesuré à la naissance de la ou des lèvres hélicoïdales de coupe. La longueur de la partie de la tige présentant la ou lesdites lèvres étant généralement de 16 mm, la différence entre le diamètre terminal et le diamètre de la tige à la naissance des lèvres est le plus généralement de 0,32 mm.

Le praticien qui procède à l'alésage d'un canal radiculaire dentaire emploie les instruments du jeu en commençant par un instrument de petit diamètre et en utilisant ensuite, successivement, les instruments de diamètre croissant jusqu'à ce que toute la pulpe infectée soit éliminée et que le canal alésé ait une forme convenant à son obturation au moyen de gutta-percha ou de ciment.

Les techniques odontologiques les plus modernes commandent que l'on donne au canal radiculaire une forme évasée, le canal étant large à sa partie cervicale, près de la couronne de la dent, et devant rester très étroit à sa partie apicale, au voisinage de l'extrémité de la racine dentaire. En effet, cette forme très évasée des canaux radiculaires une fois alésés convient mieux à l'obturation au moyen de gutta-percha, technique qui tend à se répandre de plus en plus. De tels instruments ont été proposés dans le document EP-0 257 961. Ils présentent pour tous les instruments d'un jeu le même diamètre de pointe.

Le but de la présente invention est de permettre de réaliser, plus aisément qu'avec les instruments usuels actuels, la mise en forme de canaux radiculaires évasés.

Ce but est atteint grâce aux moyens définis dans la revendication 1.

Le dessin représente, à titre d'exemple, une forme d'exécution de l'objet de l'invention.

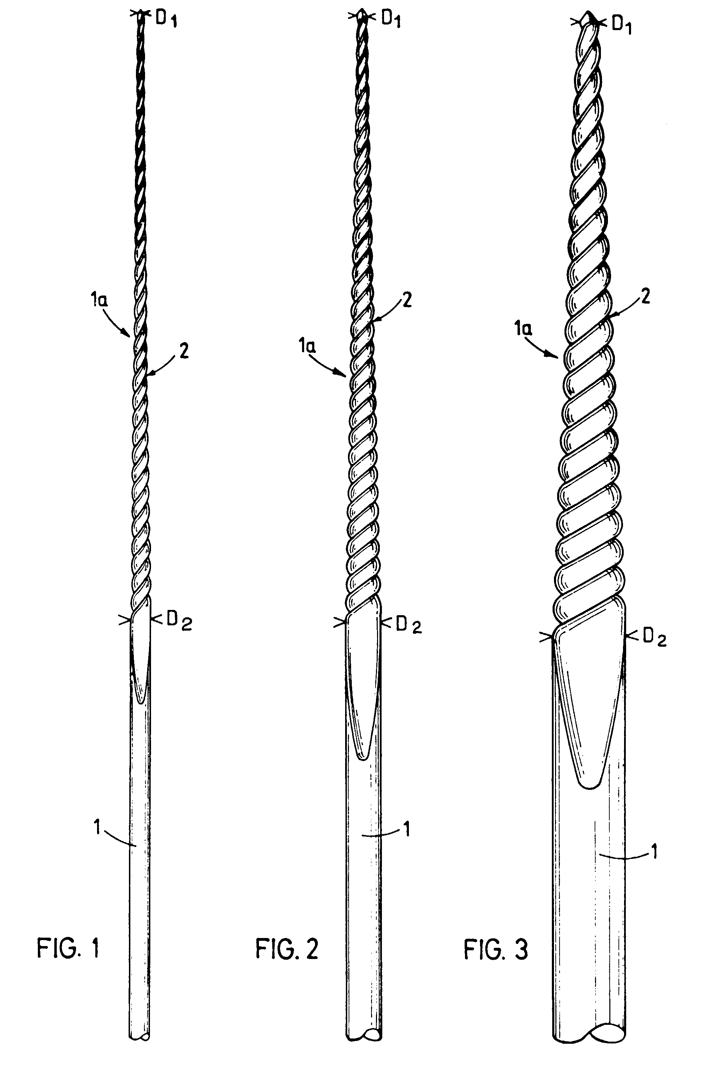

Les figs. 1, 2 et 3 sont des vues en élévation de trois instruments pour l'alésage des canaux radiculaires dentaires appartenant à un même jeu.

Les instruments représentés, au nombre de trois, alors qu'un jeu d'instruments pourra en comporter jusqu'à une vingtaine, comprennent chacun une tige cylindrique 1 destinée à s'engager soit dans un manche permettant l'actionnement manuel de l'instrument, soit dans un manche s'engageant dans une pièce à main assurant l'entraînement mécanique de l'instrument.

La tige 1 se prolonge par une partie effilée 1a dans laquelle sont ménagées des lèvres hélicoïdales de coupe 2 et qui se termine par une pointe conique 3 (fig. 2) dépourvue de lèvres de coupe.

On obtiendra cet instrument par exemple en partant d'une tige circulaire dont on effilera, par usinage, la partie antérieure 1a tout en y ménageant des faces planes, de telle manière que la partie effilée ait une section polygonale, par exemple triangulaire ou carrée. On soumettra ensuite cette barre à une torsion, réalisant ainsi les lèvres hélicoïdales 2. On pourrait aussi usiner les lèvres coupantes directement dans la tige tout en donnant à celle-ci sa forme effilée.

Le diamètre de la tige à la naissance de sa pointe, désigné par D1, constitue le diamètre nominal servant à caractériser l'instrument, alors que le diamètre désigné par D2 est le diamètre de la tige à la naissance des lèvres de coupe 2.

Les différents instruments du jeu se distinguent par leur taille, les diamètres D1 et D2 variant, d'un instrument à l'autre, selon une progression géométrique.

La raison de la progression géométrique des diamètres D1 pourra être la même que la raison de la progression des diamètres D2. Ces derniers étant plus grands que les diamètres D1, il en résulte qu'ils croissent plus vite, de sorte que l'ouverture de cône que constitue la partie active des instruments augmente, ce qui permet de donner aux canaux radiculaires une forme évasée, ce qui est le but visé par l'invention.

On pourra cependant prévoir que la raison de la progression géométrique des diamètres D1 soit supérieure à la raison de la progression géométrique des diamètres D2 tout en veillant à ce que ces derniers continuent d'augmenter plus que les diamètres D1, et ceci afin d'éviter que l'ouverture du cône que constitue la partie active des instruments n'augmente exagérément.

On pourra encore prévoir, pour certaines applications, que la raison de la progression géométrique des diamètres D1 soit inférieure à celle de la progression géométrique des diamètres D2.

Dans ce dernier cas, cependant, la relativement forte progression des diamètres D2 pourrait avoir pour conséquence de rendre les instruments de gros numéros (ceux qui se situent à la fin du jeu) trop rigides par rapport à ceux de petits numéros. En effet, l'augmentation du diamètre entraîne obligatoirement une augmentation de la rigidité des tiges, ce qui, si elle est trop marquée, peut constituer un inconvénient.

Afin que la flexibilité des différents instruments du jeu reste sensiblement la même, on pourra utiliser des matières différentes pour la réalisation des différents instruments du jeu ou, à tout le moins, de certains d'entre eux. On pourra également appliquer des traitements thermiques différents à chaque instrument du jeu ou à certains d'entre eux. On pourra encore procéder à un usinage différent de chaque instrument ou d'une partie d'entre eux, spécialement lorsque les arêtes de coupe ne sont pas obtenues par une simple torsion d'une tige effilée de section polygonale, ceci afin que l'âme des instruments reste sensiblement la même d'un instrument à l'autre ou ne varie que selon une progression inférieure à celle du diamètre extérieur des instruments, de telle sorte que les caractéristiques de flexibilité soient ainsi sensiblement maintenues d'un instrument à l'autre.

La raison des progressions géométriques des diamètres D1 et D2 des instruments du jeu pourra être, par exemple, de 20%. Dans ce cas, si l'instrument de plus petit numéro du jeu a un diamètre D1 de 0,06 mm et un diamètre D2 de 0,092 mm, les diamètres Dl et D2 du deuxième instrument seront respectivement de 0,072 mm et de 0,110 mm.

Le tableau qui suit indique les diamètres D1 et D2 des dix-huit instruments du jeu dans le cas spécifique indiqué ci-dessus, ainsi que, en dernière colonne, la différence entre D1 et D2. On voit que cette différence va croissant, de sorte que l'ouverture du cône de la partie effilée de l'instrument augmente également.

Grâce à cette disposition, les canaux radiculaires alésés à l'aide de ces instruments, utilisés successivement dans l'ordre croissant, seront plus évasés que ceux réalisés à l'aide des jeux d'instruments usuels, ce qui facilite les obturations, notamment au moyen de gutta-percha.

**TABLEAU**

| No | Ø D1 | Ø D2 | D1 - D2 |
|---|---|---|---|
| 6 | 0,06 | 0,092 | 0,032 |
| 7 | 0,072 | 0,110 | 0,038 |
| 8 | 0,086 | 0,132 | 0,046 |
| 1,0 | 0,103 | 0,159 | 0,056 |
| 1,2 | 0,124 | 0,191 | 0,067 |
| 1,4 | 0,149 | 0,229 | 0,080 |
| 1,7 | 0,179 | 0,274 | 0,095 |
| 2,1 | 0,215 | 0,330 | 0,115 |
| 2,5 | 0,258 | 0,396 | 0,138 |
| 3,1 | 0,310 | 0,475 | 0,165 |
| 3,7 | 0,372 | 0,570 | 0,198 |
| 4,4 | 0,446 | 0,683 | 0.237 |
| 5,3 | 0,535 | 0,820 | 0,285 |
| 6,4 | 0,642 | 0,984 | 0,342 |
| 7,7 | 0,770 | 1,181 | 0,411 |
| 9,2 | 0,924 | 1,417 | 0,493 |
| 11,0 | 1,109 | 1,701 | 0,592 |
| 13,3 | 1,331 | 2,041 | 0,710 |

## Revendications

1. Jeu d'instruments de taille croissante pour l'alésage des canaux radiculaires dentaires dans lequel chaque instrument comprend une tige conique présentant au moins une lèvre hélicoïdale coupante; le diamètre D1 de chaque instrument, à la naissance de sa partie terminale, variant d'un instrument à l'autre du jeu, selon une progression géométrique; caractérisé par le fait que le diamètre D2 de chaque instrument, à la naissance de sa partie coupante, varie également, d'un instrument à l'autre, selon une progression géométrique; et par le fait que les raisons desdites progressions géométriques sont telles que l'ouverture du cône de la partie active des instruments augmente d'un instrument à l'autre.

2. Jeu d'instruments suivant la revendication 1,
caractérisé par le fait que la progression géométrique selon laquelle varie le diamètre D1 des instruments a la même raison que la progression géométrique selon laquelle varie le diamètre D2 des instruments.

3. Jeu d'instruments suivant la revendication 1,
caractérisé par le fait que la raison de la progression géométrique selon laquelle varie le diamètre D1 des instruments est supérieure à celle de la progression géométrique selon laquelle varie le diamètre D2 des instruments.

4. Jeu d'instruments suivant la revendication 1, caractérisé par le fait que la raison de la progression géométrique selon laquelle varie le diamètre D1 des instruments est inférieure à celle de la progression géométrique selon laquelle varie le diamètre D2 des instruments.

5. Jeu d'instruments suivant la revendication 1, caractérisé par le fait qu'au moins une partie des instruments du jeu sont réalisés en des matières différentes de manière que la flexibilité de tous les instruments du jeu soit sensiblement la même malgré les variations de taille des différents instruments du jeu.

6. Jeu d'instruments suivant la revendication 1, caractérisé par le fait qu'au moins une partie des instruments du jeu subissent des traitements thermiques différents de manière que la flexibilité de tous les instruments du jeu soit sensiblement la même malgré les variations de taille des différents instruments du jeu.

7. Jeu d'instruments suivant la revendication 1, caractérisé par le fait que l'arête coupante d'au moins une partie des instruments du jeu est réalisée de façon différente de telle manière que la dimension de l'âme des instruments ne varie pas sensiblement d'un instrument à l'autre et que, de la sorte, la flexibilité de tous les instruments du jeu soit sensiblement la même.

## Patentansprüche

1. Set von Instrumenten zunehmender Grösse für die Aufweitung von Zahnwurzelkanälen, in dem jedes Instrument einen konischen Schaft umfasst, der zumindest eine schraubenförmige Schneidlippe aufweist; wobei sich der Durchmesser D1 jedes Instruments am Ansatz seines Schlussabschnitts von einem Instrument des Sets zum anderen entsprechend einer geometrischen Reihe ändert; dadurch gekennzeichnet, dass sich der Durchmesser D2 jedes Instruments am Ansatz seines schneidenden Abschnitts ebenfalls von einem Instrument zum anderen entsprechend einer geometrischen Reihe ändert; and dadurch, dass die Quotienten der benannten geometrischen Reihen derart sind, dass der Öffnungswinkel des Kegels des aktiven Abschnitts der Instrumente von einem Instrument zum anderen zunimmt.

2. Instrumentenset nach Anspruch 1, dadurch gekennzeichnet, dass die geometrische Reihe, nach der sich der Durchmesser D1 der Instrumente ändert, denselben Quotienten wie die geometrische Reihe hat, nach der sich der Durchmesser D2 der Instrumente ändert.

3. Instrumentenset nach Anspruch 1, dadurch gekennzeichnet, dass der Quotient der geometrischen Reihe, nach der sich der Durchmesser D1 der Instrumente ändert, grösser als der der geometrischen Reihe ist, nach der sich der Durchmesser D2 der Instrumente ändert.

4. Instrumentenset nach Anspruch 1, dadurch gekennzeichnet, dass der Quotient der geometrischen Reihe, nach der sich der Durchmesser D1 der Instrumente ändert, kleiner als der der geometrischen Reihe ist, nach der sich der Durchmesser D2 der Instrumente ändert.

5. Instrumentenset nach Anspruch 1, dadurch gekennzeichnet, dass zumindest ein Teil der Instrumente des Sets aus verschiedenen Materialien gefertigt ist, so dass die Biegsamkeit aller Instrumente des Sets trotz der Grössenänderungen der verschiedenen Instrumente des Sets im wesentlichen gleich ist.

6. Instrumentenset nach Anspruch 1, dadurch gekennzeichnet, dass zumindest ein Teil der Instrumente des Sets verschiedenen Hitzebehandlungen unterworfen wird, so dass die Biegsamkeit aller Instrumente des Sets trotz der Grössenänderungen der verschiedenen Instrumente des Sets im wesentlichen gleich ist.

7. Instrumentenset nach Anspruch 1, dadurch gekennzeichnet, dass die Schneidlippen zumindest eines Teiles der Instrumente des Sets in unterschiedlicher Weise gefertigt sind, so dass sich die Abmessungen der Seele der Instrumente von einem Instrument zum nächsten nicht wesentlich ändern und dass somit die Biegsamkeit aller Instrumente des Sets im wesentlich gleich ist.

## Claims

1. A set of instruments of increasing size for reaming tooth root canals, in which each instrument includes a conical rod exhibiting at least one helicoidal cutting lip ; the diameter D1 of each instrument, at the tip of its terminal portion, varies from one instrument of the set to the next one as in a geometrical progression ; characterised in that the diameter D2 of each instrument, at the beginning of its cutting portion, varies also from one instrument of the set to the next one as in a geometrical progression ; and in that the ratios of said geometrical progressions are such that the angle of the cone of the active part of the instruments increases from one instrument to the next one.

2. A set of instruments according to claim 1, characterised in that the geometrical progression according to which the diameter D1 of the instruments varies has the same ratio as the geometrical progression according to which the diameter D2 of the instruments varies.

3. A set of instruments according to claim 1, characterised in that the ratio of the geometrical progression according to which the diameter D1 of the instruments varies is greater than the ratio of geometrical progression according to which the diameter D2 of the instruments varies.

4. A set of instruments according to claim 1, characterised in that the ratio of the geometrical progression according to which the diameter D1 of the instruments varies is lesser than the ratio of the geometrical progression according to which the diameter D2 of the instruments varies.

5. A set of instruments according to claim 1, characterised in that at least one part of the instruments of the set are made of materials which are different, in such a manner that the flexibility of all the instruments of the set be substantially the same, despite the variations in the size of the different instruments of the set.

6. A set of instruments according to claim 1, characterised in that at least one part of the instruments of the set are subjected to different thermal treatments in such a manner that the flexibility of all the instruments of the set remain substantially identical, despite the variations in the size of the different instruments of the set.

7. A set of instruments according to claim 1, characterised in that the cutting edge of at least one part of the instruments of the set is made differently and so that the size of the core of the instruments does not vary substantially from one instrument to the next one, in order that that the flexibility of all the instruments of the set be substantially identical.
